Europäisches Patentamt

European Patent Office

Office européen des brevets

(19)

(11)  EP 0 679 970 B1

(12)  **FASCICULE DE BREVET EUROPEEN**

(45) Date de publication et mention
de la délivrance du brevet:
**17.06.1998  Bulletin 1998/25**

(51) Int Cl.⁶: **G04C 13/11**, G04C 3/14,
H02K 37/14, H02K 16/00

(21) Numéro de dépôt: **94810232.2**

(22) Date de dépôt: **25.04.1994**

(54) **Moteur pas à pas polyphasé**

Mehrphasiger Schrittmotor

Multiphase-type stepping motor

(84) Etats contractants désignés:
**CH DE ES FR IT LI**

(43) Date de publication de la demande:
**02.11.1995  Bulletin 1995/44**

(73) Titulaire: **DETRA SA**
**CH-2504 Bienne (CH)**

(72) Inventeurs:
• **Tu, Mai Xuan**
**CH-1024 Ecublens (CH)**

• **Schwab, Michel**
**CH-2502 Bienne (CH)**

(74) Mandataire: **Fischer, Franz Josef et al**
**BOVARD SA**
**Ingénieurs-Conseils ASCPI**
**Optingenstrasse 16**
**3000 Bern 25 (CH)**

(56) Documents cités:
**EP-A- 0 143 227        FR-A- 2 368 172**
**GB-A- 979 172**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne un moteur pas à pas polyphasé de faible encombrement.

La plupart des moteurs polyphasés possèdent un rotor et des enroulements de phase montés sur les circuits magnétiques disposés régulièrement le long de la périphérie du rotor. Une telle construction est rationnelle pour des moteurs de grandes dimensions, par contre elle devient très difficile à réaliser pour des moteurs de petites dimensions à cause de la dimension des enroulements de phase.

Dans la demande EP-A-0 143 227 le moteur à deux rotors couplés à une roue de transmission commune comporte un circuit magnétique du stator tel que chacun des rotors est soumis à des flux de sens opposé quand la bobine est alimentée.

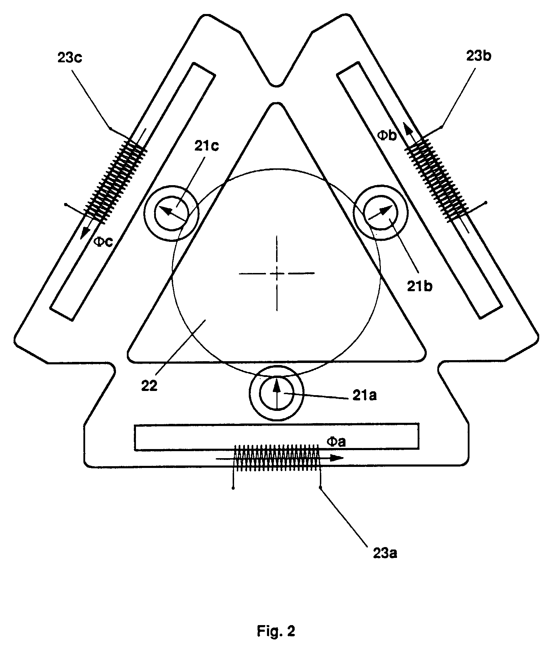

Dans le brevet FR-A-940059 il est décrit un moteur biphasé dont les enroulements de phase sont superposés et décalés dans l'espace de 90° (figure 2). Une telle disposition présente l'inconvénient d'une grande perte de place en hauteur.

Dans la demande de brevet européen EP-A-0 568 751 il est décrit un dispositif d'entraînement pour pièces d'horlogerie comportant deux moteurs pas à pas monophasés engrenant un même mobile, chaque moteur pas à pas possédant un sens de rotation préférentiel différent; l'entraînement bidirectionnel s'effectue en alimentant sélectivement l'un des deux moteurs. Une telle disposition permet un gain de place important en hauteur.

Le sens préférentiel de rotation des deux moteurs monophasés décrits dans la demande de brevet précitée est déterminé par les encoches de positionnement 13a, 13b respectivement 23a et 23b, illustrées aux figures 2 et 3. Un tel arrangement permet d'obtenir des lois de couple statique représentées à la figure 6. Dans ce dispositif d'entraînement, les 2 rotors se déplacent donc d'une position d'équilibre stable à une autre (S1 et S2 de la figure 6). Dans le cas des rotors bipolaires, l'angle de rotation des rotors entre deux positions stables est de 180°. Ce dispositif convient donc pour l'entraînement des aiguilles d'une montre analogique à quartz dans laquelle les aiguilles des secondes ou des minutes occupent des positions précises tous les 6°.

Pour certaines applications telles que l'entraînement des aiguilles d'appareils de mesure on a besoin, pour des raisons esthétiques, d'un mouvement pratiquement continu des aiguilles d'affichage; autrement dit, les rotors doivent occuper des positions intermédiaires entre les positions stables S1 et S2. Dans ces conditions, la présence du couple de positionnement 61 de la figure 6 devient indésirable car elle provoque une distorsion harmonique de rang 2 sur le couple résultant du moteur.

La suppression du couple de positionnement 61 par l'élimination des encoches de positionnement 13a et 13b respectivement 23a et 23b exige toutefois des particularités de construction et de montage pour assurer le bon fonctionnement du moteur.

L'objet de la présente invention est de remédier aux différents inconvénients précités en proposant une nouvelle solution d'un moteur polyphasé de faible encombrement, sans distorsion d'harmonique sur le couple résultant.

L'invention sera mieux comprise à l'aide de la description qui va suivre en se référant, à titre d'exemple, au dessin annexé dans lequel:

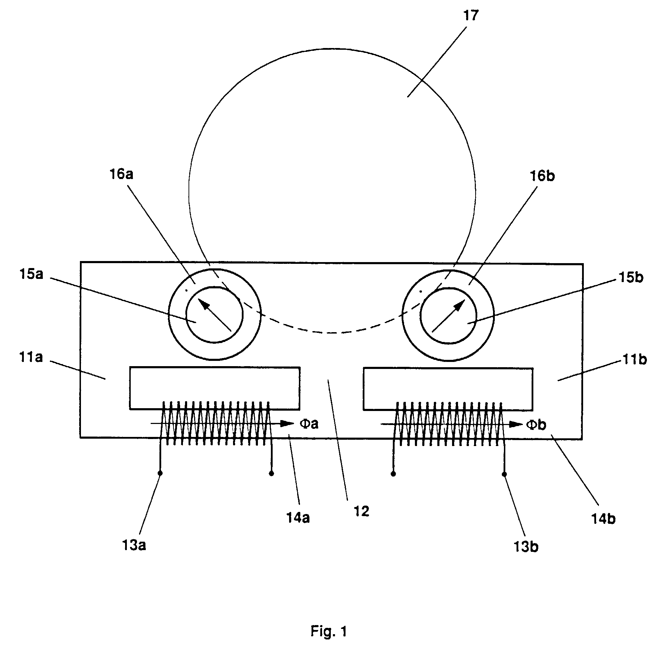

- la figure 1 représente un premier exemple d'exécution du moteur selon l'invention

- la figure 2 représente un deuxième exemple d'exécution du moteur selon l'invention

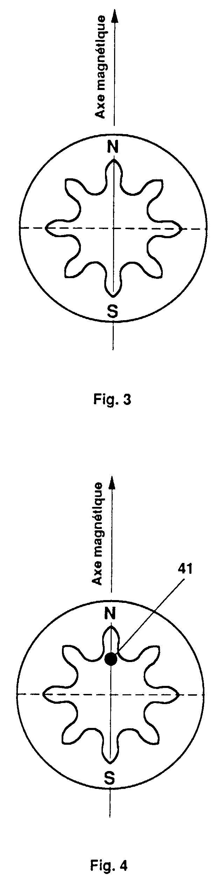

- la figure 3 représente l'orientation de l'axe magnétique du rotor par rapport à la denture du pignon

- la figure 4 représente un premier moyen de repérage de l'axe magnétique des rotors

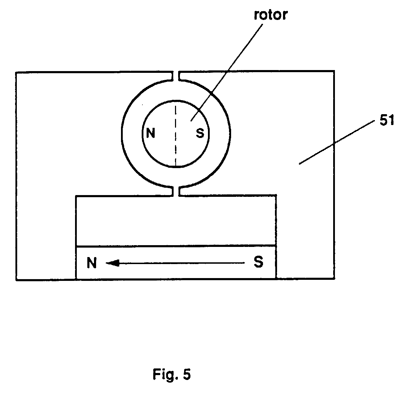

- la figure 5 représente un deuxième moyen de repérage de l'axe magnétique des rotors.

La figure 1 représente un premier exemple d'exécution du moteur selon l'invention. Le moteur de la figure 1 possède deux circuits magnétiques 11a et 11b ayant une branche commune 12, 2 enroulements de phase 13a et 13b enroulés autour des noyaux de bobine 14a et 14b, deux rotors 15a et 15b à aimantation diamétrale logés dans des trous circulaires 16a et 16b, engrenant un même mobile 17. Lors du montage, l'axe magnétique des rotors est orienté de manière à produire, au niveau des enroulements de phase, des flux couplés $\Phi a$ et $\Phi b$ déphasés entre eux de $\pi/2$.

La figure 2 représente un deuxième exemple d'exécution du moteur selon l'invention; il s'agit dans ce cas d'un moteur triphasé possédant 3 rotors 21a, 21b et 21c engrenant un même mobile 22. Ces rotors produisent au niveau des enroulements de phase 23a, 23b et 23c des flux couplés $\Phi a$, $\Phi b$ et $\Phi c$ déphasés entre eux de $2\pi/3$.

De façon générale, le moteur selon l'invention comporte m phases constituées par m enroulements de phase et m rotors engrenant un même mobile et produisant ainsi, au niveau des enroulements, des flux couplés déphasés entre eux de $\frac{\pi}{2}$ pour $m = 2$ ou $2\pi/m$ pour m différent de 2.

La précision des angles de déphasage entre les flux couplés a une importance capitale sur le bon fonctionnement du moteur. En effet, il est bien connu que pour un moteur polyphasé des déphasages incorrects provoquent un champ tournant elliptique qui nuit aux performances du moteur.

Pour assurer une bonne précision sur le déphasage, l'axe magnétique des rotors du moteur selon l'invention est orienté par rapport à la denture de leur pignon, comme l'illustre la figure 3. De plus, pour minimiser l'erreur due aux jeux d'engrenage, le pignon doit posséder un nombre suffisant de dents par rapport au nombre de phases du moteur. Les essais pratiques ont montré que pour les jeux d'engrenages habituels, le nombre de dents minimal admissible pour le pignon est de 4 m, m étant le nombre de phases du moteur.

En plus de ces dispositions constructives, la mise en place des rotors nécessite un repérage précis de leur axe magnétique. La figure 4 représente un premier moyen de repérage de l'axe magnétique du rotor; il s'agit d'un repérage géométrique, grâce à la forme asymétrique 41 sur le pignon de rotor.

La figure 5 représente un deuxième moyen de repérage de l'axe magnétique du rotor. Avant la mise en place des rotors, ces derniers sont préorientés dans un circuit magnétique polarisé 51, dans lequel les rotors peuvent tourner librement de façon à ce que leur axe magnétique s'aligne avec l'axe magnétique du circuit polarisé.

## Revendications

1. Moteur pas à pas polyphasé à m phases, possédant m rotors disposés dans un même plan et engrenant un même mobile, m circuits magnétiques couplés avec les rotors comportant chacun une bobine, caractérisé en ce que les axes magnétiques des rotors sont orientés pour fournir aux bornes des bobines un système polyphasé de tensions induites dont le déphasage entre deux phases successives est sensiblement égal à $\frac{\pi}{2}$ pour m = 2 ou 2π/m pour m différent de 2.

2. Moteur pas à pas selon la revendication 1, caractérisé en ce que lesdits rotors possèdent au moins une forme asymétrique permettant le repérage de leur axe magnétique.

3. Moteur pas à pas selon la revendication 1 ou selon la revendication 2, caractérisé en ce que le nombre de dents du pignon des rotors est supérieur ou égal à 4 x m, m étant le nombre de phases du moteur.

4. Moteur pas à pas selon une des revendications 1 à 3, caractérisé en ce que la denture du pignon de rotor est orientée par rapport à l'axe magnétique de l'aimant de rotor.

5. Dispositif d'assemblage des rotors du moteur pas à pas selon une des revendications 1 à 4, possédant au moins un moyen de préorientation des rotors, caractérisé en ce que ledit moyen de préorientation comporte un circuit magnétique polarisé dans lequel le rotor peut tourner librement de façon à ce que son axe magnétique s'aligne avec celui créé par ledit circuit magnétique polarisé.

## Patentansprüche

1. Mehrphasiger Schrittmotor mit m Phasen, enthaltend m in einer gleichen Ebene angeordnete Rotoren, die ein gleiches Teil antreiben und m mit den Rotoren gekoppelte magnetische Kreise, von denen jeder eine Spule enthält, dadurch gekennzeichnet, dass die magnetischen Achsen der Rotoren orientiert sind, um den Klemmen der Spulen ein mehrphasiges System von induzierten Spannungen zu Liefern, deren Phasenverschiebung zwischen zwei aufeinanderfolgenden Phasen im wesentlichen gleich $\frac{\pi}{2}$ ist für m = 2 oder $\frac{2\pi}{m}$ für m ungleich 2.

2. Schrittmotor nach dem Anspruch 1, dadurch gekennzeichnet, dass die besagten Rotoren mindestens eine asymmetrische Form besitzen, welche die Markierung ihrer magnetischen Achse ermöglicht.

3. Schrittmotor nach dem Anspruch 1 oder nach dem Anspruch2, dadurch gekennzeichnet, dass die Zahl der Zähne der Ritzel der Rotoren grösser oder gleich 4 x m ist, wobei m die Zahl der Phasen des Motors ist.

4. Schrittmotor nach einem der Ansprüche 1 bis 3, dadurch gekennzeichnet, dass die Verzahnung des Ritzels des Rotors in Bezug auf die magnetische Achse des Magneten des Rotors orientiert ist.

5. Vorrichtung zum Montieren von Rotoren von Schrittmotoren nach einem der Ansprüche 1 bis 4, enthaltend mindestens ein Mittel zum Vororientieren der Rotoren, dadurch gekennzeichnet, dass das besagte Mittel zum Vororientieren einen polarisierten magnetischen Kreis enthält, in welchem der Rotor frei drehen kann, derart, dass sich seine magnetische Achse mit derjenigen ausrichtet, die durch den besagten polarisierten magnetischen Kreis gebildet ist.

## Claims

1. Multiphase stepping motor with m phases, having m rotors disposed in the same plane, and engaging the same mobile, m magnetic circuits coupled to the rotors each having a coil, characterised in that the magnetic axes of the rotors are oriented to provide the terminals of the coils with a multiphase system of induced voltages, whose phase shift between two successive phases is substantially equal to π/2 for m = 2 or 2π/m for m different from 2.

2. Stepping motor according to claim 1, characterised in that said rotors have at least an asymmetrical shape allowing the identification of their magnetic axis.

3. Stepping motor according to claim 1 or according to claim 2, characterised in that the number of teeth of the pinion of the rotors is greater or equal to 4 x m, m being the number of phases of the motor.

4. Stepping motor according to one of the claims 1 to 3, characterised in that the toothing of the rotor pinion is oriented with respect to the magnetic axis of the rotor magnet.

5. Device for mounting the rotors of the stepping motor according to one of the claims 1 to 4, having at least one means of pre-orientation of the rotors, characterised in that said means of pre-orientation includes a polarised magnetic circuit in which the rotor can turn freely in such a way that its magnetic axis aligns itself with that created by said polarised magnetic circuit.

Fig. 1

Fig. 2

EP 0 679 970 B1

Fig. 3

Fig. 4

rotor

51

Fig. 5